# EUROPÄISCHE PATENTSCHRIFT

(11) **EP 0 881 403 B1**
(45) Veröffentlichungstag und Bekanntmachung des Hinweises auf die Patenterteilung: **09.10.2002**
(21) Anmeldenummer: 98109559.9
(22) Anmeldetag: 26.05.1998
(51) Int. Cl.: F16C 29/00

(54) **Läuferbaugruppe für eine Linearführungseinrichtung**
Sliding unit for a linear bearing device
Ensemble de chariot pour un dispositif de palier linéaire

(30) Priorität: 27.05.1997 DE 19722171
(43) Veröffentlichungstag der Anmeldung: 02.12.1998
(73) Patentinhaber: Deutsche Star GmbH, 97424 Schweinfurt (DE)
(72) Erfinder: Faulhaber, Thomas, Dipl.-Ing. (FH), 97493 Bergrheinfeld (DE); Howorka, Matthias, Dipl.-Ing. (FH), 97534 Waigolshausen (DE)
(74) Vertreter: Ruttensperger, Bernhard, Dipl.-Phys.

(56) Entgegenhaltungen:
- EP-A- 0 378 879
- EP-A- 0 517 951
- EP-A- 0 561 529
- DE-A- 3 638 968
- DE-A- 4 314 658
- US-A- 5 018 306

## Beschreibung

Die vorliegende Erfindung betrifft eine Läuferbaugruppe für eine Linearführungseinrichtung, bei der die Läuferbaugruppe auf einer Führungsschienenbaugruppe längs einer Führungsachse geführt ist und mindestens ein mit einer Laufbahn der Führungsschienenbaugruppe zusammenwirkendes Führungselement der Läuferbaugruppe in einer zur Führungsachse parallelen Zustellebene in einer Zustellrichtung im wesentlichen orthogonal zur Führungsachse innerhalb der Läuferbaugruppe verstellbar und damit zum Zwecke der Einstellung des Führungsspiels gegenüber der Laufbahn verstellbar ist, wobei die Läuferbaugruppe einen Grundkörper und mindestens eine Führungselementeneinheit umfaßt,
wobei diese Führungselementeneinheit an mindestens einem mit dem Grundkörper verbundenen, zu der Zustellebene im wesentlichen orthogonal verlaufenden, die Führungselementeneinheit querenden Stützglieds mittels eines Stützteils abgestützt ist und dieses Stützteil an der Führungselementeneinheit annähernd in Zustellrichtung verstellbar gelagert ist.

Aus der EP 0 517 951 B1 ist eine Läuferbaugruppe bekannt, bei welcher eine Führungselementeneinheit am Grundkörper durch eine Mehrzahl von Befestigungsschrauben anbringbar ist. Dabei durchsetzen die Befestigungsschrauben die Führungselementeneinheit und werden mit einem Gewindeabschnitt in jeweilige Gewindeöffnungen im Grundkörper eingeschraubt. In der Führungselementeneinheit ist zumindest bei einer der Befestigungsschrauben eine Zustellvorrichtung vorgesehen, vermittels welcher die Führungselementeneinheit sich an der jeweiligen Befestigungsschraube abstützt und unter Erzeugung einer Zustellkraft gegen eine Laufbahn bewegbar ist. Bei einer derartigen Läuferbaugruppe besteht das Problem, daß, nachdem einmal eine Position der Gewindeöffnungen für die Befestigungsschrauben bestimmt worden ist und die Gewindeöffnungen an diesen Positionen eingebracht worden sind, die Führungselementeneinheit lediglich zum Vorsehen der Zustellbewegung bezüglich des Grundkörpers verlagerbar ist, ansonsten aber am Grundkörper in einer definierten Lage festgelegt ist.

Es ist die Aufgabe der vorliegenden Erfindung, eine Läuferbaugruppe für eine Linearführungseinrichtung vorzusehen, welche eine einfache Anpaßbarkeit derselben an verschiedene Aufbaukonfigurationen eines Arbeitssystems ermöglicht.

Diese Aufgabe wird durch die im Anspruch 1 definierte Läuferbaugruppe gelöst.

Es kann somit bei der erfindungsgemäßen Läuferbaugruppe die Position des Stützglieds am Grundkörper ausgewählt werden, d.h. es kann auch die Position einer mit dem Stützglied zusammenwirkenden Führungselementeneinheit bezüglich des Grundkörpers ausgewählt werden. Dies gestattet eine an verschiedene Einsatzerfordernisse angepaßte Zusammensetzung der Bauteile Grundkörper und Führungselementeneinheit, so daß ein sehr flexibles und vielseitig einsetzbares System erhalten wird.

Dadurch, daß an dem Grundkörper eine längs der mindestens einen Positionierungsrichtung verlaufende Positionierungsbahn angeordnet ist und daß an dem Stützglied ein Positionierungsbahn-Eingriffsteil angebracht ist, welches in einer Mehrzahl von längs der Positionierungsbahn verteilten Positionierungsstellen an dem Grundkörper fixierbar ist, ist dafür gesorgt, daß, aufgrund der Fixierung des Positionierungsbahn-Eingriffsteils und somit des Stützglieds in der jeweiligen Positionierungsbahn, die jeweilige Führungselementeneinheit sich zur Zustellung gegen eine Führungsbahn am Stützglied abstützen kann, ohne daß dabei die Gefahr besteht, daß das Stützglied sich in seiner Führungsbahn verschiebt oder verkippt oder in ungeeigneter Weise bewegt.

Um dabei die Anzahl der möglichen Relativpositionierungsstellungen maximal zu machen, wird vorgeschlagen, daß das Positionierungsbahn-Eingriffsteil längs der Positionierungsbahn kontinuierlich verstellbar und in beliebigen Positionierungsstellen fixierbar ist.

Zum Vorsehen eines sicher wirkenden, jedoch eine leichte Positionseinstellung gewährleistenden Zusammenwirkens zwischen der Positionierungsbahn und der Führungselementeneinheit wird vorgeschlagen, daß die Positionierungsbahn von einer hinterschnittenen Positionierungsnut in einer Anlagefläche des Grundkörpers gebildet ist, an welcher die Führungselementeneinheit mit einer Gegenanlagefläche anliegt. Beispielsweise kann die Positionierungsnut durch eine T-Nut oder eine Schwalbenschwanznut gebildet sein.

Eine einfach herzustellende und einfach zu lösende Fixierung der Führungselementeneinheit am Grundkörper kann erhalten werden, wenn das Positionierungsbahn-Eingriffsteil in der Positionierungbahn durch Klemmmittel fixierbar ist.

Dabei kann die Ausgestaltung beispielsweise derart sein, daß bei Ausführung der Positionierungsbahn als hinterschnittene Nut und Unterbringung des Positionierungsbahn-Eingriffteils innerhalb der hinterschnittenen Positionierungsnut die Klemmmittel mindestens ein Bodenklemmstück und mindestens eine Hinterschneidungs-Klemmfläche aufweisen, wobei die Hinterschneidungs-Klemmfläche eine Hinterschneidungsfläche der hinterschnittenen Positionierungsnut hintergreift und das Bodenklemmstück gegenüber dem Positionierungsbahn-Eingriffsteil verstellbar ist und auf den Boden der hinterschnittenen Positionierungsnut einwirkt.

Wenn dabei das mindestens eine Bodenklemmstück in dem Positionierungsbahn-Eingriffsteil durch Verschraubung verstellbar ist, dann ist bei sicherer Klemmwirkung wieder für eine leichte Lösbarkeit und Herstellbarkeit des Klemmeingriffs gesorgt.

Um die Teilezahl der erfindungsgemäßen Läuferbaugruppe möglichst gering zu halten, wird vorgeschlagen, daß mindestens ein Bodenklemmstück von dem Endabschnitt eines Stützglieds gebildet ist.

Um dabei die Klemmwirkung herzustellen bzw. lösen zu können, wird vorgeschlagen, daß das Stützglied an seinem positionierungsbahnfernen Endabschnitt eine Drehwerkzeug-Eingriffsfläche zum Annähern des positionierungsbahnnahen Endabschnitts gegen den Boden der hinterschnittenen Positionierungsnut und ein Spannstück-Eingriffsmittel für den Eingriff eines die Führungselementeneinheit gegen den Grundkörper andrückenden Spannstücks aufweist.

Eine einfach und sicher wirkende Fixierung der Führungselementeneinheit kann erreicht werden, wenn die Spannstück-Eingriffsmittel von einem Außengewinde des Stützglieds gebildet sind und das Spannstück von einer Spannmutter gebildet ist.

Gemäß einer weiteren Ausgestaltungsform der vorliegenden Erfindung kann vorgesehen sein, daß das Positionierungsbahn-Eingriffsteil mindestens eine Gewindebohrung für die Aufnahme eines von dem Stützglied gesonderten Bodenklemmstücks und mindestens eine weitere Gewindebohrung für die Aufnahme eines Außengewindes des Stützglieds aufweist, wobei an dem Stützglied in einem positionierungsbahnfernen Bereich eine Spannfläche zum Andrücken der Führungselementeneinheit gegen den Grundkörper angebracht ist.

Vorzugsweise ist das Positionierungsbahn-Eingriffsteil zur Fixierung von zwei einander quer zur Führungsachse gegenüberliegenden Führungselementeneinheiten ausgebildet, welche entsprechenden Laufbahnen der Führungsschienenbaugruppe zugeordnet sind.

Um die Freiheit bei der Auswahl der Relativpositionierung zwischen Führungselementeneinheit und Grundkörper weiter zu erhöhen, wird vorgeschlagen, daß an mindestens einer Anlagefläche des Grundkörpers eine Mehrzahl von parallelen Positionierungsbahnen nebeneinander angeordnet ist. Darüber hinaus ist es möglich, daß an mindestens zwei Anlageflächen des Grundkörpers jeweils mindestens eine Positionierungsbahn vorgesehen ist, wobei die Positionierungsbahnen in den Anlageflächen zueinander im wesentlichen parallel verlaufen. Mit einer derartigen Ausgestaltung des Grundkörpers lassen sich flexible, in mehreren Bewegungskoordinatenrichtungen arbeitende Arbeitsstationen erstellen.

Insbesondere ist eine derartige Ausgestaltung des Grundkörpers dann vorteilhaft, wenn der Grundkörper als ein Extrusionsprofil ausgebildet ist, in welchem mindestens eine Positionierungsbahn als hinterschnittene Positionierungsnut im Zuge des Extrusionsvorgangs gebildet ist.

An dem Grundkörper können mindestens zwei Gruppen von Führungselementeneinheiten angebracht sein, welche zum Zusammenwirken mit verschiedenen Führungsschienen-Baugruppen bestimmt sind. Wie bereits erwähnt, können somit in zumindest zwei Bewegungskoordinatenrichtungen arbeitende Arbeitsstationen, Bewegungsroboter oder dgl. realisiert werden.

Um die Bewegung in verschiedenen Koordinatenrichtungen möglichst effektiv zu gestalten, wird vorgeschlagen, daß die Gruppen von Führungselementeneinheiten zum Zusammenwirken mit sich kreuzenden Führungsschienenbaugruppen angeordnet sind.

Zum Vorsehen einer geeigneten Zustellkraft einer jeweiligen Führungselementeneinheit gegen eine Führungsbahn wird vorgeschlagen, daß das Stützteil an der Führungselementeneinheit durch ein Stellgetriebe verstellbar ist.

Die vorliegende Erfindung wird nachfolgend in bezug auf die beiliegenden Zeichnungen anhand bevorzugter Ausführungsformen detailliert beschrieben. Es zeigt:
- Fig. 1: eine schematische Seitenansicht einer erfindungsgemäßen Läuferbaugruppe, welche mit zwei zueinander im wesentlichen orthogonal stehenden Führungsbahnen zusammenwirkt;
- Fig. 2: eine Teil-Schnittansicht längs einer Linie II-II in Fig. 1;
- Fig. 3: eine Seitenansicht der in Fig. 2 dargestellten Läuferbaugruppe in Blickrichtung eines Pfeils III in Fig. 2;
- Fig. 4: eine der Fig. 2 entsprechende Ansicht einer alternativen Ausgestaltungsform der Läuferbaugruppe;
- Fig. 5: eine der Fig. 3 entsprechende Ansicht in Blickrichtung V in Fig. 4;
- Fig. 6: eine erläuternde Schnittansicht längs einer Linie VI-VI in Fig. 1, welche eine mögliche Ausgestaltungsform einer Zustellvorrichtung für eine Führungselementeneinheit zeigt;

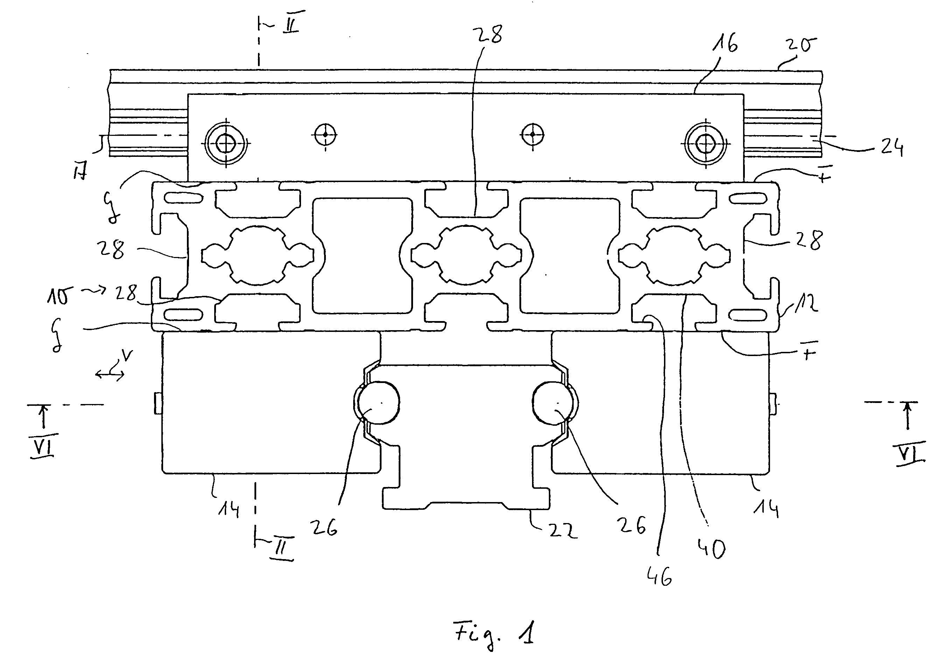

Die Fig. 1 zeigt eine schematische Seitenansicht einer Läuferbaugruppe 10. Die Läuferbaugruppe 10 umfaßt einen Grundkörper 12 sowie eine erste Gruppe von Führungselementeneinheiten mit Führungselementeneinheiten 14 sowie eine zweite Gruppe von Führungselementeneinheiten mit Führungselementeneinheiten 16, von welchen in der Darstellung der Fig. 1 nur die vor einer Führungsbahn 20 liegende Führungselementeneinheit 16 erkennbar ist. Die Führungselementeneinheiten 14,16 liegen an einer jeweiligen Anlagefläche F des Grundkörpers 12 mit jeweiligen Gegenflächen G an. Eine weitere Führungsbahn 22 ist zwischen den Führungselementeneinheiten 14 der ersten Gruppe angeordnet und verläuft im wesentlichen orthogonal zur Führungsbahn 20. Entsprechend dem Verlauf der jeweiligen Führungsbahnen 20,22 sind auch die Führungselementeneinheiten 14 bzw. 16 am Grundkörper 12 jeweils derart angebracht, daß sie sich in einer jeweiligen Längsrichtung der entsprechenden Führungsbahn 20 bzw. 22 erstrecken. D.h. auch die jeweiligen Führungselementeneinheiten 14 bzw. 16 der verschiedenen Gruppen sind am Grundkörper 12 bezüglich einander im wesentlichen orthogonal angeordnet. Die Führungselementeneinheiten 14 bzw. 16 liegen an den Führungsbahnen 20,22 über nachfolgend beschriebene Führungselemente, beispielsweise Führungsrollen, und an den jeweiligen Führungsbahnen vorgesehene Führungsdrähte 24 bzw. 26 an.

Wie in Fig. 1 erkennbar, ist am Grundkörper 12 eine Mehrzahl von Profilnuten 28 vorgesehen, in deren Bereich, wie nachfolgend beschrieben, die jeweiligen Führungselementeneinheiten 14,16 in ihrer Lage veränderbar am Grundkörper 12 angebracht werden können.

Wenn man zunächst die Fig. 2 und 3 betrachtet, so erkennt man, daß die jeweiligen Führungselementeneinheiten 16 durch Befestigungsbolzen 30 am Grundkörper 12 festgelegt werden. Die Befestigungsbolzen 30 sind als Gewindebolzen mit Außengewinde ausgebildet, d.h. sie weisen zumindest in ihren beiden Endbereichen jeweils Außengewindeabschnitte auf und durchsetzen jeweilige Durchgangsöffnungen 32 in den Führungselementeneinheiten 16. In den jeweiligen Nuten 28 sind Nutensteine 34 aufgenommen. Die Nutensteine 34 weisen ein derartiges Querschnittsprofil auf, daß sie in den im wesentlichen T-artig ausgebildeten Nuten 28 in Nutlängsrichtung in einer Positionierungsrichtung P verschoben werden können, sich in den Nuten jedoch nicht drehen und nicht aus den Nuten herausfallen können. Jeder Nutenstein 34 weist eine Innengewindeöffnung 36 auf, in welche die Befestigungsbolzen 30 mit ihrem Außengewinde eingeschraubt werden können.

Zur Befestigung einer Führungselementeneinheit 16 am Grundkörper 12 wird wie folgt vorgegangen: Zunächst werden die zugehörigen Nutensteine näherungsweise in die gewünschte Lage am Grundkörper 12, d.h. in der zugehörigen Nut 28 gebracht. Darauf folgend wird in jeden der Nutensteine ein Befestigungsbolzen 30 eingeschraubt, jedoch nicht so weit, daß er mit seinem Endabschnitt 38 am Nutboden 40 aufsteht. Zum Einschrauben der Befestigungsbolzen 30 in die Nutensteine 34 ist an oeren anderen Enden 42 eine Werkzeugeingriffsanordnung 43, beispielsweise in Form einer Inbus-Öffnung 43 oder dgl., ausgebildet.

Da in einer derartigen Stellung die Befestigungsbolzen 30 mit ihren Enden 38 noch nicht am Nutboden 40 aufstehen, können die Nutensteine 34 zusammen mit den Befestigungsbolzen 30 immer noch in den Nuten 28 verschoben werden. Ist eine gewünschte Grob- oder Feinpositionierung vorgenommen worden, werden dann die Führungselementeneinheiten 16 mit ihren Durchgangsöffnungen 32 über die Befestigungsbolzen 30 geschoben. Bei der Darstellung gemäß Fig. 2 kann dies beispielsweise unter gleichzeitigem Anordnen der Führungsbahn 20 mit ihren Führungsdrähten 24 zwischen den Führungselementeneinheiten 16 vorgenommen werden. Nachfolgend werden die Befestigungsbolzen 30 wieder vermittels eines Werkzeugs weiter in die Nutensteine 34 eingeschraubt, bis sie mit ihren Enden 38 gegen den Nutboden 40 drücken und somit in entsprechender Weise die Nutensteine 34 vom Nutboden 40 weg bewegt werden und mit jeweiligen Hinterschneidungs-Klemmflächen 44 gegen Hinterschneidungsflächen 46 (siehe Fig. 1) der Nuten 28 drücken. Werden dabei die Befestigungsbolzen 30 fest angezogen, so führt dies zu einer aufgrund der hervorgerufenen Klemmwirkung sicheren Fixierung der Befestigungsbolzen 30 am Grundkörper 12. Nach oder vor einem derartigen Fixieren der Befestigungsbolzen 30 können im Bereich der Enden 42 Muttern 48 auf die Befestigungsbolzen 30 aufgeschraubt werden, jedoch nur so weit, daß sie lediglich ein unbeabsichtigtes Abfallen der Führungselementeneinheiten 16 von den Befestigungsbolzen 30 verhindern, die Führungselementeneinheiten 16 jedoch noch nicht endgültig am Grundkörper 12 fixieren.

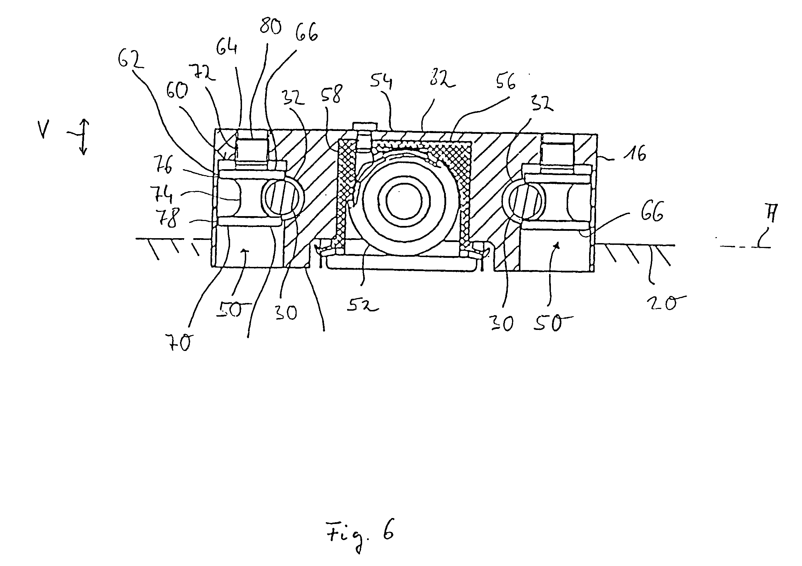

Wie in Fig. 2 zu erkennen, sind den jeweiligen Befestigungsbolzen 30 allgemein mit 50 bezeichnete Zustellvorrichtungen zugeordnet, durch welche die Führungselementeneinheiten 16 unter Abstützung an den Befestigungsbolzen 30 gegen die Führungsbahn 20, d.h. die Führungsdrähte 24 derselben, angestellt werden können, um ein gewünschtes Bewegungsspiel einzustellen. Der grundsätzliche Aufbau und die Funktionsweise einer derartigen Zustellvorrichtung wird nachfolgend in bezug auf die Fig. 6 beschrieben.

In Fig. 6 ist eine Schnittansicht einer Führungselementeneinheit 16 mit einer Führungsrolle 52 gezeigt, die zwischen zwei Durchgangsöffnungen 32 angeordnet ist. Die Führungselementeneinheit 16 umfaßt einen Körper 54 mit einer Ausnehmung 56, in welcher eine Auskleidung 58 mit einer darin drehbaren Führungsrolle 52 aufgenommen ist. Die Auskleidung 58 bildet eine Schmiermitteltasche für die Führungsrolle 52, um diese in geschmierter Art und Weise entlang der Führungsbahn 20 bewegen zu können. An beiden axialen Enden des Körpers 54 sind zur Führungsbahn 20 im wesentlichen orthogonal stehende Durchgangsöffnungen 60 ausgebildet, welche einen der Führungsbahn 20 naheliegenden Abschnitt 62 mit größerem Querschnitt und einen zum Abschnitt 62 koaxial angeordneten und von der Führungsbahn 20 abgewandt liegenden Abschnitt 64 mit kleinerem Querschnitt aufweisen. Der Abschnitt 64 mit kleinerem Durchmesser ist ein Innengewindeabschnitt. In jeder der Durchgangsöffnungen 60 ist eine Stellschraube 66 angeordnet, die einen ersten spulenartigen Abschnitt 70 mit größerem Durchmesser aufweist, der mit einem Außengewindeabschnitt 72 mit kleinerem Durchmesser fest verbunden oder integral ausgebildet ist. Der Abschnitt 72 mit kleinerem Durchmesser ist ein Außengewindeabschnitt, der in den Abschnitt 64 der Durchgangsöffnung 60 eingeschraubt ist. Die Durchgangsöffnung 32 für den Befestigungsbolzen 30 und die Durchgangsöffnung 60 stehen im wesentlichen orthogonal zueinander und sind derart angeordnet, daß sie sich bereichsweise überlappen. Dies führt dazu, daß, wie in Fig. 6 erkennbar, der Befestigungsbolzen 30 bereichsweise in die Umfangsnut 74 des Abschnitts 70 der Stellschraube 66 eingreift und somit durch Umfangsflanschabschnitte 76,78 an beiden Seiten in einer Zustellrichtung V ergriffen ist.

Die Durchgangsöffnung 60 ist in ihrem Abschnitt 64 zu einer von der Führungsbahn 20 abgewandten Rückseite 82 des Körpers 54 offen, so daß ein Werkzeug in eine am Abschnitt 72 der Stellschraube 66 vorgesehene Werkzeugangriffsanordnung, beispielsweise Inbus-Öffnung, eingeführt werden kann. Durch Drehen des Werkzeugs und somit der Stellschraube 66 wird die Stellschraube 66 in Richtung der Zustellrichtung V verlagert. Da die Umfangsflansche 76,78 an beiden Seiten des Befestigungsbolzens 30 angreifen, wird bei einer derartigen Verlagerung der Stellschraube 66 auch der in der Durchgangsöffnung 32 mit Bewegungsspiel in der Zustellrichtung V aufgenommene Befestigungsbolzen 30 bezüglich des Körpers 54 in der Zustellrichtung V verlagert. Da der Befestigungsbolzen 30 jedoch am Grundkörper fixiert ist, führt eine derartige Relativverlagerung zwischen Befestigungsbolzen 30 und Körper 54 der Führungselementeneinheit 16 zu einer Bewegung des Körpers 54 in einer durch die Zeichenebene der Fig. 6 gebildeten Zustellebene E (siehe Fig. 2). Durch geeignetes Betätigen der beiden Stellschrauben 66 im Körper 54 kann somit eine gewünschte Zustellung der Führungselementeneinheit 16 gegen die Führungsbahn 20 und daher die gewünschte Spieleinstellung vorgenommen werden.

Da die Zustellrichtung V in wesentlichen orthogonal zu der Führungsachse A der Führungsbahn 20 liegt, wird die Zustellung mit maximaler Effektivität vorgenommen.

Um das vorangehend beschriebene Zustellen der Führungselementeneinheiten 14 bzw. 16 gegen die jeweiligen Führungsbahnen 20 bzw. 22 unter Abstützung an den Befestigungsbolzen 30 zu ermöglichen, sind, wie vorangehend beschrieben, die Befestigungsbolzen 30 in den jeweiligen Nuten 28 gegen Verschiebung in der Positionierungsrichtung P gesichert. Dies ist insbesondere bei den in Fig. 1 oben dargestellten Führungselementeneinheiten 16 von Bedeutung, bei welchen die zur Zeichenebene in Fig. 1 und somit zur Führungsachse A orthogonal stehende Zustellrichtung V parallel zu den ebenfalls orthogonal zur Zeichenebene in Fig. 1 stehenden Nuten 28 verläuft. Würden die Befestigungsbolzen nicht wie vorangehend beschrieben gegen Verschiebung in den Führungsnuten 28 gesichert sein, so würde die Zustellung der Führungselementeneinheiten 16 aufgrund der Abstützung an den Befestigungsbolzen 30 zu einer Verschiebung der Befestigungsbolzen 30 in den Nuten 28 führen.

Auch bei den in Fig. 1 unten gezeigten Führungselementeneinheiten 14, bei welchen die Führungsnuten 28 orthogonal zu der für die Führungselementeneinheiten 14 wirksamen Zustellrichtung V stehen, ist die Fixierung der Befestigungsbolzen in den Führungsnuten 28 vorteilhaft, da dann auch ein aufgrund eines Bewegungsspiels der Nutensteine 34 mögliches seitliches Verkippen der Befestigungsbolzen 30 vermieden werden kann.

Sind die jeweiligen Stellschrauben 66 zur Erzeugung der gewünschten Zustellung betätigt worden und somit die Führungselementeneinheiten 14 bzw. 16 in ihrer gewünschten Relativlage bezüglich den jeweiligen Führungsbahnen 20,22 angeordnet, so können dann die Muttern 48 angezogen werden und die Führungselementeneinheiten 14 bzw. 16 endgültig am Grundkörper 12 festgelegt werden. Eine nachträgliche . Korrektur der Lage ist durch Lockern der Muttern 48 bzw. des Klemmeingriffs der Befestigungsbolzen 30 am Nutboden 40 jederzeit möglich.

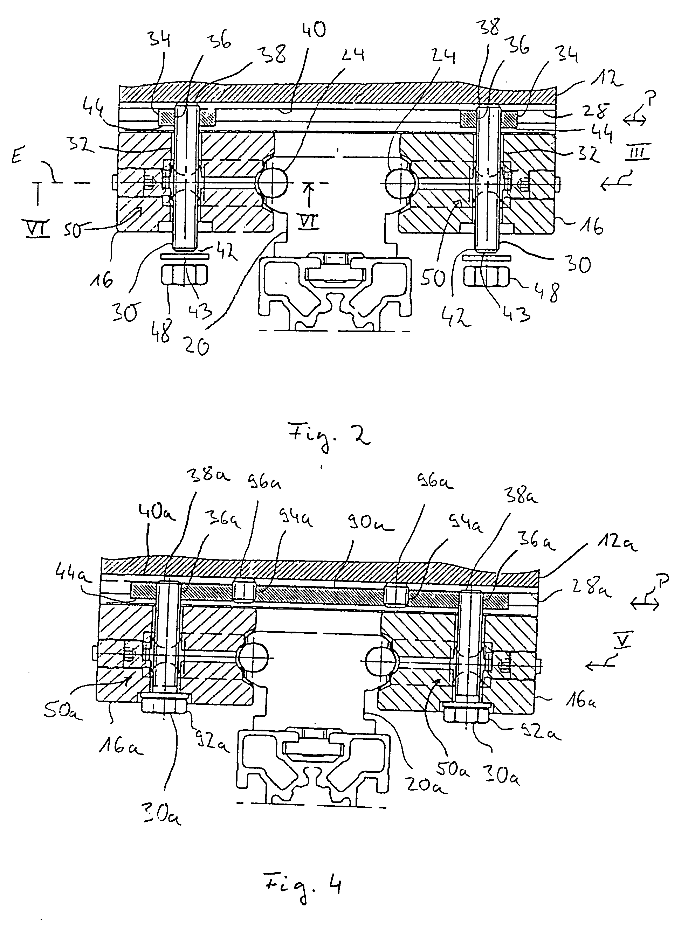

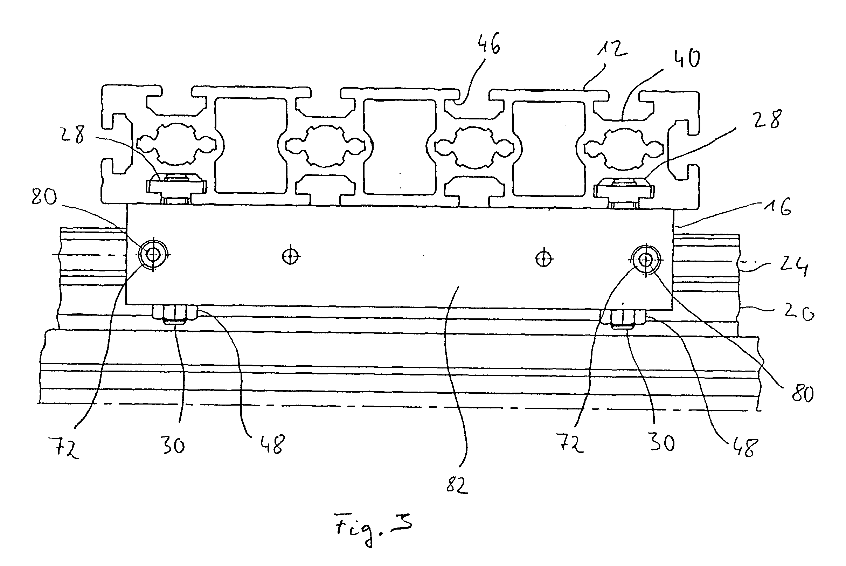

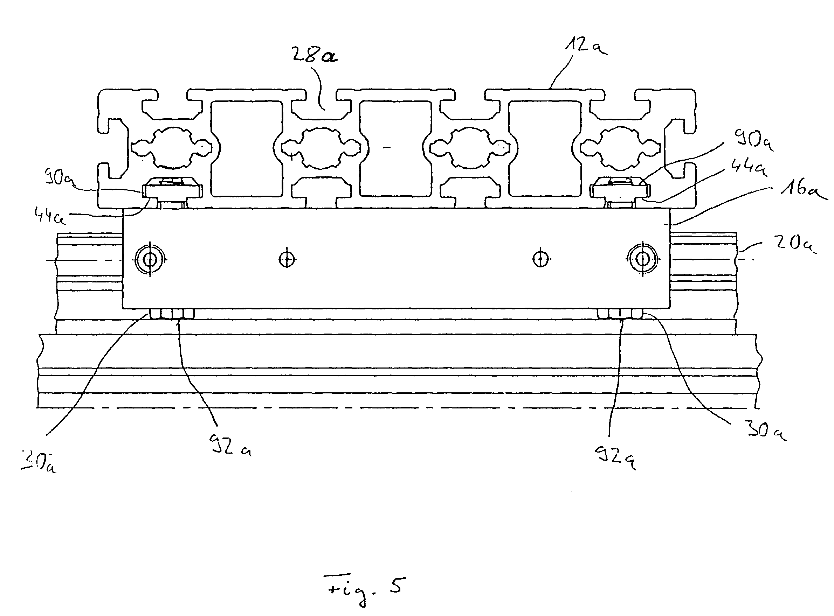

In den Fig. 4 und 5 ist eine alternative Ausgestaltungsform vorgesehen, welche in ihrem Aufbau im wesentlichen der mit Bezug auf die Fig. 2 und 3 beschriebenen Ausgestaltungsform entspricht. Gleiche Komponenten sind daher mit den gleichen Bezugszeichen unter Hinzufügung des Anhangs "a" bezeichnet. Im nachfolgenden wird lediglich auf den Unterschied hinsichtlich der Ausgestaltungsform gemäß Fig. 2 und 3 eingegangen.

Wie in Fig. 4 erkennbar, ist anstatt der Nutensteine 34 eine Nutenleiste 90a vorgesehen, welche beiden Führungselementeneinheiten 16a zugeordnet ist. Die Nutenleiste 90a weist wiederum Innengewindeöffnungen 36a für die Befestigungsbolzen 30a auf. In dieser Ausgestaltung sind die Befestigungsbolzen 30a durch normale Schraubbolzen gebildet, die einen Kopf 92a aufweisen.

Zur Fixierung der Nutenleiste 90a in der jeweiligen Führungsnut 28a weist die Nutenleiste 90a weitere Innengewindeöffnungen 94a auf, in welche Klemmschrauben 96a eingeschraubt sind. Zur Befestigung von Führungselementeneinheiten 16a am Grundkörper 12a wird wie folgt vorgegangen: Zunächst wird die oder jede Nutenleiste 90a in die gewünschte Stellung gebracht und die Klemmschrauben 96a vermittels eines Werkzeugs angezogen, so daß sie gegen den Nutboden 40a drücken. Dabei wird, ebenso wie vorangehend beschrieben, wieder eine Verlagerung der Nutenleiste 90a in der Führungsnut 28a erzielt, bis die Nutenleiste 90a an der Hinterschneidungsfläche der Nut 28a anliegt und somit in der Nut 28a geklemmt ist. Nachfolgend werden die Führungselementeneinheiten 16a, ggf. mit der bereits zwischen diesen angeordneten Führungsbahn 20a, durch die Befestigungsbolzen 30a, welche in die Innengewindeöffnungen 36a eingeschraubt werden, am Grundkörper 12a angebracht. Die Befestigungsbolzen 30a werden dabei nur so weit eingeschraubt, daß immer noch eine Zustellung der Führungselementeneinheiten 16a vermittels der Zustellvorrichtungen 50a vorgenommen werden kann. Die Vorgehensweise hierbei entspricht der vorangehend mit Bezug auf die Fig. 6 beschriebenen Vorgehensweise. Ist die Zustellung im gewünschten Ausmaße vorgenommen worden, werden die Befestigungsbolzen 30a weiter angezogen, so daß die Führungselementeneinheiten 16a am Grundkörper 12a fixiert werden. Die Befestigungsbolzen 30a sind derart bemessen, daß sie bei einem vollständigen Fixieren der Führungselementeneinheiten 16a am Grundkörper 12a nicht am Nutboden 40a aufstehen, wodurch eine möglicherweise ausreichend feste Klemmwirkung der Führungselementeneinheiten 16a am Grundkörper 12a verhindert werden könnte. Vielmehr ist selbst im vollständig angezogenen Zustand der Befestigungsbolzen 30a immer noch ein ausreichender Zwischenraum zwischen deren Enden 38a und dem Nutboden 40a vorgesehen. Es ist selbstverständlich, daß bei allen für die jeweiligen Führungselementeneinheiten 16a vorgesehenen Befestigungsbolzen derartige Nutenleisten 90a vorgesehen sein können.

Bei den Ausgestaltungsformen gemäß Figuren 1 - 6 kann zur Erhöhung der Verschiebesicherheit für die Befestigungsbolzen 30 bzw. 30a jeweils an den Hinterschneidungs-Klemmflächen 44 bzw. 44a der Nutensteine 34 bzw. der Nutenleisten 90a eine Profilierung beispielsweise in Form von Rippen vorgesehen sein, die quer zur Positionierungsrichtung P verlaufen und sich bei Abstützung der Befestigungsbolzen 30 bzw. der Klemmschrauben 96a am Nutboden 40 bzw. 40a in die gegenüberliegenden Hinterschneidungsflächen 46 am Grundkörper 12 einprägen und somit eine Verschiebung der Nutensteine 34 bzw. der Nutenleisten 90a in der Positionierungsrichtung P erheblich erschweren.

Bei den vorangehend beschriebenen Ausgestaltungsformen sind verschiedene Modifikationen möglich. So ist es beispielsweise möglich, daß die Nuten 28a nicht das dargestellte T-förmige Profil aufweisen, sondern ein schwalbenschwanzförmiges Profil aufweisen, wobei dann die Nutensteine bzw. die Nutenleiste ein komplementäres Schwalbenschwanzprofil aufweisen. Auch ist eine dübelartige Fixierung der Befestigungsbolzen in den Nuten möglich.

Durch die erfindungsgemäße Läuferbaugruppe ist in einfacher Weise der Aufbau einer in zwei oder mehreren Koordinatenrichtungen arbeitenden Arbeitsmaschine möglich. Insbesondere ist aufgrund der Verschiebbarkeit der Führungselementeneinheiten am jeweiligen Grundkörper eine sehr hohe Freiheit bei der Ausgestaltung eines Bewegungssystems möglich. Da die Befestigungsbolzen erfindungsgemäß in den Führungsnuten gegen Verschiebung gesichert werden, ist es nicht erforderlich, die Nuten derart auszubilden, daß sie an jeder Seite des Grundkörpers 12 orthogonal zur Zustellrichtung V stehen, um bei der Zustellung ein ungewünschtes Verschieben der Befestigungsbolzen zu verhindern. Vielmehr können, wie in Fig. 1 erkennbar, an allen Seiten des Grundkörpers 12 zueinander parallel in einer Richtung verlaufende Führungsnuten 28 vorgesehen werden. Dies ermöglicht die einfache und sehr kostengünstige Herstellung des Grundkörpers 12 aus Kunststoff oder Aluminium oder dgl. in einem Strangpreß-Verfahren mit einem dementsprechend geformten Extruder-Kopf. Zusätzliche Arbeitsschritte zum Einbringen der hinterschnittenen Nuten in den Grundkörper sind dabei nicht mehr erforderlich.

## Patentansprüche

1. Läuferbaugruppe (10; 10a) für eine Linearführungseinrichtung, bei der die Läuferbaugruppe (10; 10a) auf einer Führungsschienenbaugruppe längs einer Führungsachse (A) geführt ist und mindestens ein mit einer Laufbahn (20, 22; 20a) der Führungsschienenbaugruppe zusammenwirkendes Führungselement (52) der Läuferbaugruppe (10; 10a) in einer zur Führungsachse (A) parallelen Zustellebene (E) in einer Zustellrichtung (V) im Wesentlichen orthogonal zur Führungsachse (A) innerhalb der Läuferbaugruppe (10; 10a) verstellbar und damit zum Zwecke der Einstellung des Führungsspiels gegenüber der Laufbahn (20, 22; 22a) verstellbar ist,
wobei die Läuferbaugruppe (10; 10a) einen Grundkörper (12; 12a) und mindestens eine Führungselementeneinheit (14, 16) umfasst,
und wobei diese Führungselementeneinheit (14, 16; 16a) an mindestens einem mit dem Grundkörper (12; 12a) verbundenen, zu der Zustellebene (E) im Wesentlichen orthogonal verlaufenden, die Führungselementeneinheit (14, 16; 16a) querenden Stützglied (30; 30a) mittels eines Stützteils (66) abgestützt ist und dieses Stützteil (66) an der Führungselementeneinheit (14, 16; 16a) annähernd in Zustellrichtung (V) verstellbar gelagert ist,
**dadurch gekennzeichnet,**
**dass** an dem Grundkörper (12; 12a) eine längs mindestens einer zum Verlauf des Stützgliedes (30; 30a) quer liegenden Positionierungsrichtung (P) verlaufende Positionierungsbahn (28; 28a) angeordnet ist,
**dass** ein Positionierungsbahn-Eingriffsteil (34; 90a) in der Positionierungsbahn (28; 28a) angeordnet und unabhängig von der Festlegung der Führungselementeneinheit (14, 16; 14a, 16a) am Grundkörper (12; 12a) in einer Mehrzahl von längs der Positionierungsbahn (28; 28a) verteilten Positionierungsstellen an dem Grundkörper (12; 12a) fixierbar ist und
**dass** das Stützglied (30; 30a) vermittels des Positionierungsbahn-Eingriffsteils (34; 90a) unabhängig von der Festlegung der Führungselementeneinheit (14, 16; 14a, 16a) am Grundkörper (12, 12a) zur eine Verstellung des mindestens einen Führungselementes (52; 52a) in der Zustellrichtung (V) zulassenden Abstützung des Stützteils (62; 62a) an dem Stützglied (30; 30a) mit dem Grundkörper (12; 12a) fest koppelbar oder gekoppelt ist.

2. Läuferbaugruppe nach Anspruch 1
**dadurch gekennzeichnet,**
**daß** das Positionierungsbahn-Eingriffsteil (34;90a) längs der Positionierungsbahn (28;28a) kontinuierlich verstellbar und in beliebigen Positionierungsstellen fixierbar ist.

3. Läuferbaugruppe nach Anspruch 2,
**dadurch gekennzeichnet,**
**daß** die Positionierungsbahn (28;28a) von einer hinterschnittenen Positionierungsnut (28;28a) in einer Anlagefläche (F) des Grundkörpers (12;12a) gebildet ist, an welcher die Führungselementeneinheit (14,16;16a) mit einer Gegenanlagefläche (G) anliegt.

4. Läuferbaugruppe nach Anspruch 3,
**dadurch gekennzeichnet,**
**daß** die hinterschnittene Positionierungsnut (28;28a) eine T-Nut oder Schwalbenschwanznut ist.

5. Läuferbaugruppe nach einem der Ansprüche 1 - 4,
**dadurch gekennzeichnet,**
**daß** das Positionierungsbahn-Eingriffsteil (34;90a) in der Positionierungsbahn (28;28a;28b) durch Klemmmittel (30;96a) fixierbar ist.

6. Läuferbaugruppe nach Anspruch 5,
**dadurch gekennzeichnet,**
**daß** bei Ausführung der Positionierungsbahn (28;28a) als hinterschnittene Positionierungsnut und Unterbringung des Positionierungsbahn-Eingriffteils (34;90a) innerhalb der hinterschnittenen Positionierungsnut (28;28a) die Klemmmittel (30;96a) mindestens ein Bodenklemmstück (30;96a) und mindestens eine Hinterschneidungs-Klemmfläche (44;44a) aufweisen, wobei die Hinterschneidungs-Klemmfläche (44;44a) eine Hinterschneidungsfläche (46) der hinterschnittenen Positionierungsnut (28;28a) hintergreift und das Bodenklemmstück (30;96a) gegenüber dem Positionierungsbahn-Eingriffsteil (34;90a) verstellbar ist und auf den Boden (40;40a) der hinterschnittenen Positionierungsnut (28;28a) einwirkt.

7. Läuferbaugruppe nach Anspruch 6,
**dadurch gekennzeichnet,**
**daß** das mindestens eine Bodenklemmstück (30;96a) in dem Positionierungsbahn-Eingriffsteil (34;90a) durch Verschraubung verstellbar ist.

8. Läuferbaugruppe nach Anspruch 7,
**dadurch gekennzeichnet,**
**daß** mindestens ein Bodenklemmstück (30) von dem Endabschnitt (38) eines Stützglieds (30) gebildet ist.

9. Läuferbaugruppe nach Anspruch 8,
**dadurch gekennzeichnet,**
**daß** das Stützglied (30) an seinem positionierungsbahnfernen Endabschnitt (42) eine Drehwerkzeug-Eingriffsfläche (43) zum Annähern des positionierungsbahnnahen Endabschnitts (38) gegen den Boden (40) der hinterschnittenen Positionierungsnut (28) und ein Spannstück-Eingriffsmittel für den Eingriff eines die Führungselemerteneinheit (14,16) gegen den Grundkörper (12) andrückenden Spannstücks (48) aufweist.

10. Läuferbaugruppe nach Anspruch 9,
**dadurch gekennzeichnet,**
**daß** die Spannstück-Eingriffsmittel von einem Außengevinde des Stützglieds (30) gebildet sind und das Spannstück (48) von einer Spannmutter (48) gebildet ist.

11. Läuferbaugruppe nach Anspruch 7,
**dadurch gekennzeichnet,**
**daß** das Positionierungsbahn-Eingriffsteil (90a) mindestens eine Gewindebohrung (94a) für die Aufnahme eines von dem Stützglied (30a) gesonderten Bodenklemmstücks (96a) und mindestens eine weitere Gewindebohrung (36a) für die Aufnahme eines Außengewindes des Stützglieds (30a) aufweist, wobei an dem Stützglied (30a) in einem positionierungsbahnfernen Bereich eine Spannfläche zum Andrücken der Führungselementeneinheit (16a) gegen den Grundkörper (12a) angebracht ist.

12. Läuferbaugruppe nach einem der Ansprüche 1-11,
**dadurch gekennzeichnet,**
**daß** das Positionierungsbahn-Eingriffsteil (34;90a) zur Fixierung von zwei einander quer zur Führungsachse (A) gegenüberliegenden Führungselementeneinheiten (14,16;14a) ausgebildet ist, welche entsprechenden Laufbahnen (20,22;22a;20b) der Führungsschienenbaugruppe zugeordnet sind.

13. Läuferbaugruppe nach einem der Ansprüche 1 - 12,
**dadurch gekennzeichnet,**
**daß** an mindestens einer Anlagefläche (F) des Grundkörpers (12;12a) eine Mehrzahl von parallelen Positionierungsbahnen (28;28a) nebeneinander angeordnet sind.

14. Läuferbaugruppe nach Anspruch 13,
**dadurch gekennzeichnet,**
**daß** an mindestens zwei Anlageflächen (F) des Grundkörpers (12) jeweils mindestens eine Positionierungsbahn (28;28a) vorgesehen ist, wobei die Positionierungsbahnen (28;28a) in den Anlageflächen (F) zueinander im wesentlichen parallel verlaufen.

15. Läuferbaugruppe nach Anspruch 14,
**dadurch gekennzeichnet,**
**daß** der Grundkörper (12;12a) als ein Extrusionsprofil ausgebildet ist, in welchem mindestens eine Positionierungsbahn (28;28a) als hinterschnittene Positionierungsnut (28;28a) im Zuge des Extrusionsvorgangs gebildet ist.

16. Läuferbaugruppe nach einem der Ansprüche 1 - 15,
**dadurch gekennzeichnet,**
**daß** an dem Grundkörper (12;12a) mindestens zwei Gruppen von Führungselementeneinheiten (14,16;16a) angebracht sind, welche zum Zusammenwirken mit verschiedenen Führungsschienenbaugruppen (20,22;22a) bestimmt sind.

17. Läuferbaugruppe nach Anspruch 16,
**dadurch gekennzeichnet,**
**daß** die Gruppen von Führungselementeneinheiten (14,16; 16a) zum Zusammenwirken mit sich kreuzenden Führungsschienenbaugruppen (20,22;22a) angeordnet sind.

18. Läuferbaugruppe nach einem der Ansprüche 1 - 17,
**dadurch gekennzeichnet,**
**daß** das Stützteil (66) an der Führungselementeneinheit (16) durch ein Stellgetriebe (72) verstellbar ist.

## Claims

1. Traveller assembly (10; 10a) for a linear guiding device, said traveller assembly (10; 10a) being guided on a guide rail assembly along a guide axis (A), wherein at least one guide member (52) of said traveller assembly (10; 10a) cooperating with a raceway (20, 22; 20a) of said guide rail assembly is adjustable within said traveller assembly (10; 10a) in a plane of advancement (E) parallel to said guide axis (A) in a direction of advancement (V) substantially perpendicular with respect to said guide axis (A) and therefore is adjustable for adjusting the guiding clearance with respect to said raceway (20, 22; 22a),
said traveller assembly (10; 10a) comprising a basic body (12; 12a) and at least one guide member unit (14, 16),
said guide member unit (14, 16; 16a) being supported on at least one support member (30; 30a) by means of a support element (66), said support member (30; 30a) being connected to said basic body (12; 12a), and extending substantially perpendicular with respect to said plane of advancement (E), and crossing said guide member unit (14, 16; 16a), said support element (66) being adjustably supported substantially in said direction of advancement (V) on said guide member unit (14, 16; 16a), **characterized in that**
a positioning track (28; 28a) extending along at least one positioning direction (P) is arranged on said basic body (12; 12a), said positioning direction being transverse with respect to the extension of said support member (30; 30a),
that a positioning track engagement element (34; 90a) is arranged in said positioning track (28; 28a), said positioning track engagement element (34; 90a) being fixable at a plurality of positioning locations on said basic body (12; 12a), independently of the fixing of said guide member unit (14, 16; 14a, 16a), said positioning locations being distributed along said positioning track (28; 28a), and **in**
**that** said support member (30; 30a) is fixedly coupleable or coupled with said basic body (12; 12a) by means of said positioning track engagement element (34; 90a) independently of the fixation of said guide member unit (14, 16; 14a, 16a) on said basic body (12, 12a) for supporting the support element (62; 62a) on the support member (30; 30a) such as to allow the adjustment of said at least one guide member (52; 52 a) in said direction of advancement (V).

2. Traveller assembly according to claim 1, **characterized in that** said positioning track engagement element (34; 90a) is continuously adjustable along said positioning track (28; 28a) and fixable at arbitrary positioning locations.

3. Traveller assembly according to claim 2, **characterized in that** said positioning track (28; 28a) is provided by an undercut positioning groove (28; 28a) in an abutment face (F) of said basic body (12; 12a), said guide member unit (14, 16; 16a) lying against said abutment face (F) with a counter abutment face (G) thereof.

4. Traveller assembly according to claim 3, **characterized in that** said undercut positioning groove (28; 28a) is a T-groove or a dove-tailed groove.

5. Traveller assembly according to one of the claims 1-4, **characterized in that** said positioning track engagement element (34; 90a) is fixable in said positioning track (28; 28a; 28b) by clamping means (30; 96a).

6. Traveller assembly according to claim 5, **characterized in that**, if said positioning track (28; 28a) is provided as an undercut positioning groove and said positioning track engagement member (34; 90a) is arranged within said undercut positioning groove (28; 28a), said clamping means (30; 96a) comprises at least one bottom clamping member (30; 96a) and at least one undercut clamping face (44; 44a), said undercut clamping face (44; 44a) engaging an undercut face (46) of said undercut positioning groove (28; 28a) from the rear, said bottom clamping member (30; 96a) being adjustable with respect to said positioning track engagement element (34; 90a) and acting onto the bottom (40; 40a) of said undercut positioning groove (28; 28a).

7. Traveller assembly according to claim 6, **characterized in that** said at least one bottom clamping member (30; 96a) is adjustable within said positioning track engagement element (34; 90a) by screwing.

8. Traveller assembly according to claim 7, **characterized in that** at least one bottom clamping member (30) is provided by an end portion (38) of a support member (30).

9. Traveller assembly according to claim 8, **characterized in that** said support member (30) has at an end portion thereof remote from said positioning track (42) a turning tool engagement face (43) for approaching an end portion thereof proximate to said positioning groove (38) to the bottom (40) of the undercut positioning groove (28), and has a tightening member engagement means for the engagement of a tightening member (48) pressing said guide member unit (14, 16) against said basic body (12).

10. Traveller assembly according to claim 9, **characterized in that** said tightening member engagement means is an external thread of said support member (30), said tightening member (48) being a tightening nut (48).

11. Traveller assembly according to claim 7, **characterized in that** said positioning groove engagement element (90a) has at least one threaded hole (94a) for receiving a bottom clamping member (96a) separated from said support member (30a), and has at least one further threaded hole (36a) for receiving an external thread of said support member (30a), a tightening face being provided on said support member (30a) in a portion thereof remote from said positioning track for pressing said guide member unit (16a) against said basic body (12a).

12. Traveller assembly according to one of the claims 1-11, **characterized in that** said positioning track engagement element (34; 90a) is arranged for the fixation of two guide member units (14, 16; 14a) opposing each other transversely with respect to the guide axis (A), said guide member units being associated to respective raceways (20, 22; 22a; 20b) of said guide rail assembly.

13. Traveller assembly according to one of the claims 1-12, **characterized in that** a plurality of parallel positioning tracks (28; 28a) is provided side by side on at least one abutment face (F) of said basic body (12; 12a).

14. Traveller assembly according to claim 13, **characterized in that** at least one respective positioning track (28; 28a) is provided at each of at least two abutment faces (F) of said basic body (12), said positioning tracks (28; 28a) extending substantially parallel to each other in said abutment faces (F).

15. Traveller assembly according to claim 14, **characterized in that** said basic body (12; 12a) is an extrusion profile in which at least one positioning track (28; 28a) is formed as an undercut positioning groove (28; 28a) during the extrusion procedure.

16. Traveller assembly according to one of the claims 1-15, **characterized in that** at least two groups of guide member units (14, 16; 16a) are attached to said basic body (12; 12a), said groups being provided for the cooperation with different guide rail assemblies (20, 22; 22a).

17. Traveller assembly according to claim 16, **characterized in that** said groups of guide member units (14, 16; 16a) are arranged for the cooperation with guide rail assemblies (20, 22; 22a) crossing each other.

18. Traveller assembly according to one of the claims 1-17, **characterized in that** said support element (66) is adjustable on said guide member unit (16) by means of an adjusting drive (72).

## Revendications

1. Ensemble chariot (10 ; 10a) pour un dispositif de guidage linéaire, dans lequel l'ensemble chariot (10 ; 10a) est guidé sur un ensemble de rails de guidage le long d'un axe de guidage (A), et au moins un élément de guidage (52), coopérant avec une voie de roulement (20, 22 ; 20a) de l'ensemble de rails de guidage, de l'ensemble chariot (10 ; 10a), est déplaçable à l'intérieur de l'ensemble chariot (10 ; 10a) dans un plan d'approche (E) parallèle à l'axe de guidage (A), dans une direction d'approche (V), sensiblement orthogonalement à l'axe de guidage (A), et est donc déplaçable par rapport à la voie de roulement (20, 22 ; 22a) afin de régler le jeu de guidage,
dans lequel l'ensemble chariot (10 ; 10a) comprend un corps de base (12 ; 12a) et au moins une unité d'éléments de guidage (14, 16)
et dans lequel cette unité d'éléments de guidage (14, 16 ; 16a) est appuyée, au moyen d'un élément d'appui (66), sur au moins un organe d'appui (30 ; 30a) relié au corps de base (12 ; 12a), s'étendant sensiblement orthogonalement au plan d'approche (E), traversant l'unité d'éléments de guidage (14, 16 ; 16a), et cet élément d'appui (66) est monté réglable approximativement dans la direction d'approche (V), sur l'unité de guidage (14, 16 ; 16a),
**caractérisé**
**en ce qu'**une voie de positionnement (28 ; 28a) s'étendant le long d'au moins un dispositif de positionnement (P), qui s'étend transversalement par rapport au parcours de l'organe d'appui (30 ; 30a), est disposée sur le corps de base (12 ; 12a),
**en ce qu'**un élément d'engagement de voie de positionnement (34 ; 90a) est disposé dans la voie de positionnement (28 ; 28a) et peut être fixé au corps de base (12 ; 12a), indépendamment de la fixation de l'unité d'éléments de guidage (14, 16 ; 14a, 16a) sur le corps de base (12 ; 12a), dans une pluralité d'emplacements de positionnement répartis le long de la voie de positionnement (28 ; 28a), et
**en ce que** l'organe d'appui (30 ; 30a) peut être accouplé ou est accouplé fixement au corps de base (12 ; 12a), par l'intermédiaire de l'élément d'engagement de voie de positionnement (34 ; 90a), indépendamment de la fixation de l'unité d'éléments de guidage (14, 16 ; 14a, 16a) sur le corps de base (12 ; 12a), pour un appui de l'élément d'appui (62 ; 62a) contre l'organe d'appui (30 ; 30a), autorisant un déplacement du ou des éléments de guidage (52 ; 52a) dans la direction d'approche (V).

2. Ensemble chariot selon la revendication 1,
**caractérisé**
**en ce que** l'élément d'engagement de voie de positionnement (34 ; 90a) peut être fixé de manière réglable en continu le long de la voie de positionnement (28 ; 28a) et dans des emplacements de positionnement quelconques.

3. Ensemble chariot selon la revendication 2,
**caractérisé**
**en ce que** la voie de positionnement (28 ; 28a) est formée par une rainure de positionnement (28 ; 28a) détalonnée dans une surface de contact (F) du corps de base (12 ; 12a), contre laquelle l'unité d'éléments de guidage (14, 16 ; 16a) s'applique par une contre-surface de contact (G).

4. Ensemble chariot selon la revendication 3,
**caractérisé**
**en ce que** la rainure de positionnement (28 ; 28a) détalonnée est une rainure en T ou une rainure en queue d'aronde.

5. Ensemble chariot selon l'une des revendications 1 à 4,
**caractérisé**
**en ce que** l'élément d'engagement de voie de positionnement (34 ; 90a) peut être fixé dans la voie de positionnement (28 ; 28a ; 28b) par des moyens de serrage (30 ; 96a).

6. Ensemble chariot selon la revendication 5,
**caractérisé**
**en ce que** dans le cas où la voie de positionnement (28 ; 28a) est réalisée en tant que rainure de positionnement détalonnée et dans le cas où l'élément d'engagement de voie de positionnement (34 ; 90a) est logé à l'intérieur de la rainure de positionnement (28 ; 28a) détalonnée, les moyens de serrage (30 ; 96a) comportent au moins une pièce de serrage de fond (30 ; 96a) et au moins une pièce de serrage de détalonnage (44 ; 44a), la surface de serrage de détalonnage (44 ; 44a) passant derrière une surface de détalonnage (46) de la rainure de positionnement (28 ; 28a) détalonnée, et la pièce de serrage de fond (30 ; 96a) étant déplaçable par rapport à l'élément d'engagement de voie de positionnement (34 ; 90a) et agissant sur le fond (40 ; 40a) de la rainure de positionnement (28 ; 28a) détalonnée.

7. Ensemble chariot selon la revendication 6,
**caractérisé**
**en ce que** la ou les pièces de serrage de fond (30 ; 96a) sont déplaçables dans l'élément d'engagement de voie de positionnement (34 ; 90a) par vissage.

8. Ensemble chariot selon la revendication 7,
**caractérisé**
**en ce qu'**au moins une pièce de serrage de fond (30) est formée par le tronçon terminal (38) d'un organe d'appui (30).

9. Ensemble chariot selon la revendication 8,
**caractérisé**
**en ce que** l'organe d'appui (30) comporte, sur son tronçon terminal (42) éloigné de la voie de positionnement, une surface d'engagement d'outil rotatif (43) pour approcher le tronçon terminal (38) proche de la voie de positionnement contre le fond (40) de la rainure de positionnement (28) détalonnée, et un moyen d'engagement de pièce de serrage pour l'engagement d'une pièce de serrage (48) pressant l'unité d'éléments de guidage (14, 16) contre le corps de base (12).

10. Ensemble chariot selon la revendication 9,
**caractérisé**
**en ce que** les moyens d'engagement de pièce de serrage sont formés par un filetage extérieur de l'organe d'appui (30), et la pièce de serrage (48) est formée par un écrou de serrage (48).

11. Ensemble chariot selon la revendication 7,
**caractérisé**
**en ce que** l'élément d'engagement de voie de positionnement (90a) comporte au moins un trou taraudé (94a) pour recevoir une pièce de serrage de fond (96a) séparée de l'organe d'appui (30a), et au moins un autre trou taraudé (36a) pour recevoir un filetage extérieur de l'organe d'appui (30a), une surface de serrage étant ménagée sur l'organe d'appui (30a) dans une zone éloignée de la voie de positionnement, pour presser l'unité d'éléments de guidage (16a) contre le corps de base (12a).

12. Ensemble chariot selon l'une des revendications 1 à 11,
**caractérisé**
**en ce que** l'élément d'engagement de voie de positionnement (34 ; 90a) est conçu pour la fixation de deux unités d'éléments de guidage (14, 16 ; 14a) opposées l'une à l'autre transversalement à l'axe de guidage (A), lesquelles sont associées à des voies de roulement (20, 22 ; 22a ; 20b) correspondantes de l'ensemble de rails de guidage.

13. Ensemble chariot selon l'une des revendications 1 à 12,
**caractérisé**
**en ce que** sur au moins une surface de contact (F) du corps de base (12 ; 12a) sont disposées côte à côte une pluralité de voies de positionnement (28 ; 28a) parallèles.

14. Ensemble chariot selon la revendication 13,
**caractérisé**
**en ce que** sur au moins deux surfaces de contact (F) du corps de base (12) est prévue respectivement au moins une voie de positionnement (28 ; 28a), les voies de positionnement (28 ; 28a) s'étendant sensiblement parallèlement l'une à l'autre dans les surfaces de contact (F).

15. Ensemble chariot selon la revendication 14,
**caractérisé**
**en ce que** le corps de base (12 ; 12a) est réalisé sous la forme d'un profilé extrudé dans lequel, au cours de l'opération d'extrusion, est formée au moins une voie de positionnement (28 ; 28a) sous la forme d'une rainure de positionnement (28 ; 28a) détalonnée.

16. Ensemble chariot selon l'une des revendications 1 à 15,
**caractérisé**
**en ce que** sur le corps de base (12 ; 12a) sont placés au moins deux groupes d'unités d'éléments de guidage (14, 16 ; 16a) qui sont destinés à coopérer avec différents ensembles de rails de guidage (20, 22 ; 22a).

17. Ensemble chariot selon la revendication 16,
**caractérisé**
**en ce que** les groupes d'unités d'éléments de guidage (14, 16 ; 16a) sont disposés pour coopérer avec des ensembles de rails de guidage (20, 22 ; 22a) se croisant.

18. Ensemble chariot selon l'une des revendications 1 à 17,
**caractérisé**
**en ce que** l'élément d'appui (66) est réglable sur l'unité d'éléments de guidage (16) au moyen d'un mécanisme de réglage (72).
